# EUROPÄISCHE PATENTSCHRIFT

(11) **EP 2 485 548 B1**
(45) Veröffentlichungstag und Bekanntmachung des Hinweises auf die Patenterteilung: **14.12.2016**
(21) Anmeldenummer: 12154038.9
(22) Anmeldetag: 06.02.2012
(51) Int. Cl.: H04W 72/00, H04W 84/18, H04W 72/02

(54) **Verfahren zur Durchführung eines Wechsels eines von einer Gruppe aus mehreren Teilnehmern gemeinsam genutzten Übertragungskanals**
Method for changing a transmission channel used by a group of multiple participants
Procédé de réalisation d'un changement d'un canal de transmission utilisé par un groupe de plusieurs participants

(30) Priorität: 04.02.2011 DE 102011003656
(43) Veröffentlichungstag der Anmeldung: 08.08.2012
(73) Patentinhaber: MESH Mobile Electronics in Sport & Health GmbH, 82205 Gilching (DE)
(72) Erfinder: Matzner, Rolf Dr., 80639 München (DE); Zawallich, Ingo, 29646 Bispingen (DE)
(74) Vertreter: Hofstetter, Schurack & Partner

(56) Entgegenhaltungen:
- EP-A1- 1 658 698
- WO-A1-2008/115996

## Beschreibung

Die vorliegende Erfindung betrifft ein Verfahren zur Durchführung eines Wechsels eines von einer Gruppe aus mehreren Teilnehmern gemeinsam genutzten Übertragungskanals gemäß dem Oberbegriff von Patentanspruch 1. Sie betrifft überdies eine Sende- und Empfangsvorrichtung, die einem Teilnehmer einer Gruppe zugeordnet ist, wobei die Sende- und Empfangsvorrichtung ausgebildet ist zur Durchführung eines derartigen Verfahrens.

Ein gattungsgemäßes Verfahren ist aus der WO 2005/011203 A1 bekannt. In einer Ausführungsform beinhaltet ein erster Knoten aus einer Gruppe verteilter Knoten, die in der Lage sind, zwischen den verteilten Knoten ein Kommunikationsnetzwerk zu formen und umzuformen, wobei jeder der Knoten funktionell ähnliche Komponenten zur Formung und Umformung eines solchen Netzwerks beinhaltet, einen Speicher zur Speicherung von Werten für Variable für den Knoten. Der erste Knoten beinhaltet des Weiteren eine oder mehrere Komponenten, die gemeinsam dazu ausgelegt sind: (1) spontan und unabhängig von einer zentralen Steuerung, die mit dem Netzwerk verbunden ist, Sondierungsmitteilungen an einen oder mehrere der anderen Knoten zum Zwecke der Formung oder Umformung eines Netzwerks zu senden; (2) eine Sondierungsmitteilung von einem zweiten Knoten zu empfangen, wobei die Sondierungsmitteilung Werte für die Variablen für den zweiten Knoten beinhaltet; (3) die Werte für die Variablen für den ersten Knoten mit den Werten für die Variablen für den zweiten Knoten in der Sondierungsmitteilung zu vergleichen, um unabhängig von einer zentralen Steuerung, die mit dem Netzwerk verbunden ist, zu entscheiden, ob sich der erste Knoten auf einen neuen Kanal setzen soll; und (4), falls ja, den ersten Knoten auf den neuen Kanal zu setzen. Die Variablen für die Knoten umfassen: eine Wechselzählervariable, die angibt, wie oft der Knoten einen Kanal gewechselt hat, und eine Standardübertragungskanalvariable, die angibt, ob der Knoten gegenwärtig einen Standardübertragungskanal hat, auf dem der Knoten mit anderen Knoten kommuniziert. Die genannten Variablen werden ausgetauscht und verglichen, um einen effizienteren Wechsel eines Kanals für den Knoten selbst und das Netzwerk als Ganzes bereitzustellen. Das Netzwerk selbst kann ein Ad-hoc-Netzwerk (zum Beispiel IBSS Netzwerk 802.11), ein HyperLAN oder ein selbstorganisierendes Netzwerk ohne zentrale Steuerung sein.

In der WO 2008/115996 A1 werden Systeme und Verfahren für verteilte überlagerte mehrkanalige Medienzugriffskontrolle für drahtlose Ad-hoc-Netzwerke beschrieben. In einem Aspekt unterteilen die Systeme und Verfahren Kanalfrequenzen, die durch ein drahtloses Netzwerkprotokoll definiert werden, in einen einzigen Standardübertragungskanal und mehrere Ausweichkanäle, die orthogonal zum Standardübertragungskanal sind. Jeder der Netzwerkknoten in dem Ad-hoc-Netzwerk verwendet den Standardübertragungskanal für jeweilige variable und sich überschneidende Zeiträume, um die Netzwerkverbindung mit jeweiligen anderen Netzwerkknoten aufrechtzuerhalten. Außerdem bestimmt jeder der Netzwerkknoten, ob und wann er für einen variablen Zeitraum von dem Standardübertragungskanal zu einem bestimmten Ausweichkanal der Ausweichkanäle wechselt, um den Datendurchsatz über eine oder mehrere entsprechende Kommunikationsverbindungen in dem Ad-hoc-Netzwerk mit (einem) anderen Netzwerkknoten zu erhöhen.

Aus der DE 10 2005 040 577 A1 ist ein fehlertolerantes Verfahren zur autonomen Koordination des spontanen Zugriffs mehrerer Teilnehmer auf ein gemeinsam genutztes Übertragungsmedium bekannt. Dieses Verfahren betrifft eine Problematik, wie sie in Funknetzen mit mehreren Teilnehmern auftreten kann. Sie betrifft insbesondere den Fall, dass mehr Teilnehmer die gemeinsam genutzte Bandbreite gleichzeitig nutzen wollen als innerhalb der verfügbaren Bandbreite an Übertragungskapazität zur Verfügung steht. In diesem Fall muss ein Arbitrierungsverfahren entscheiden, welche der sendewilligen Teilnehmer tatsächlich senden dürfen.

Beim Mobilfunk, beispielsweise GSM, UMTS, wird die Zuordnung der Sprachkanäle zu den einzelnen Teilnehmern durch so genannte Basisstationen gesteuert. Die Koordination des Zugriffs erfolgt hierbei also nicht autonom, sondern macht vielmehr eine hierarchisch übergeordnete Instanz - die Basisstation - erforderlich. Soll die Koordination jedoch autonom erfolgen, müssen die gleichberechtigten Teilnehmer die Belegung unter sich ausmachen. Bei einem Funknetz mit mehreren mobilen Teilnehmern ist dabei problematisch, dass in bestimmten Situationen die direkte Verbindung zwischen einigen Teilnehmern unterbrochen sein kann. Bei dem aus der genannten Druckschrift bekannten Verfahren wird zur Koordination des spontanen Zugriffs mehrerer Teilnehmer auf einen oder mehrere gemeinsam genutzte Übertragungskanäle so vorgegangen, dass zunächst in einem ersten Schritt jeder Teilnehmer seinen Sendewunsch sendet. Anschließend sendet jeder Teilnehmer zu einem späteren Zeitpunkt einen aus den empfangenen Sendewünschen der anderen Teilnehmer und dem eigenen Sendewunsch berechneten Status. Schließlich entscheidet jeder Teilnehmer mit eigenen Sendewunsch anhand der empfangenen Status sowie des berechneten eigenen Status, ob er einen der gemeinsam genutzten Übertragungskanäle belegen darf. Zu den Details dieses Verfahrens wird auf die genannte DE 10 2005 040 577 A1 verwiesen, deren Offenbarungsgehalt durch diese Bezugnahme in die vorliegende Anmeldung aufgenommen wird.

Die vorliegende Erfindung betrifft einen Teilaspekt des aus der genannten DE 10 2005 040 577 A1 bekannten Verfahrens und zwar die Durchführung eines Wechsels des Übertragungskanals im Falle von Übertragungsstörungen, beispielsweise beim Zusammentreffen mit einer anderen Gruppe, deren aktueller Standard-Übertragungskanal dem aktuellen Standard-Übertragungskanal der eigenen Gruppe entspricht.

Die Aufgabe der vorliegenden Erfindung besteht deshalb darin, für ein Übertragungsverfahren zur autonomen Koordination des spontanen Zugriffs mehrerer Teilnehmer auf ein gemeinsam genutztes Übertragungsmedium ein geeignetes Verfahren zur Durchführung eines Wechsels des Übertragungskanals vorzuschlagen. Das Verfahren soll für die Teilnehmergruppe möglichst einfach durchführbar sein und dennoch möglichst schnell zu einer ungestörten Übertragung zurückführen. Die Aufgabe besteht weiterhin darin, eine Sende- und Empfangsvorrichtung bereitzustellen, die einem Teilnehmer einer Gruppe zugeordnet ist, wobei die Sende- und Empfangsvorrichtung ausgebildet sein soll zur Durchführung des erfindungsgemäßen Verfahrens.

Diese Aufgaben werden gelöst durch ein Verfahren mit den Merkmalen von Patentanspruch 1 sowie durch eine Sende- und Empfangsvorrichtung mit den Merkmalen von Patentanspruch 6.

Der vorliegenden Erfindung liegt die Erkenntnis zugrunde, dass die oben genannte Aufgabe gelöst werden kann, wenn grundsätzlich Ausweichkanäle in einer bestimmten Reihenfolge bereitgestellt werden sowie eine intelligente Vorgehensweise, wie bei Störungen der Wechsel von einem Übertragungskanal zu einem anderen vorzunehmen ist.

Demgemäß wird zunächst in einem Schritt a) eine Reihenfolge von Übertragungskanälen in einer Initialisierungsphase der Formierung der Gruppe festgelegt, wodurch ein erster Übertragungskanal und Ausweichkanäle bestimmt werden. Anschließend senden und empfangen alle Teilnehmer in einem Schritt b) auf dem ersten Übertragungskanal der festgelegten Reihenfolge von Übertragungskanälen als aktuellem Standard-Übertragungskanal. Wird in einem Schritt c) festgestellt, dass ein Teilnehmer während einer ersten vorgebbaren Zeitdauer mindestens eine vorgebbare Anzahl von Teilnehmern auf dem aktuellen Standard-Übertragungskanal nicht empfangen kann, beginnt er zusätzlich in ersten vorgebbaren zeitlichen Abständen in mindestens einem Ausweichkanal zu lauschen. Gemäß einem Schritt d) macht der Teilnehmer zumindest dann, wenn der Teilnehmer auf dem gerade gelauschten Ausweichkanal mindestens einen Slot empfängt, den er als von der eigenen Gruppe gesendet erkennt, den gerade gelauschten Ausweichkanal zum aktuellen Standard-Übertragungskanal, wobei die Ausweichkanäle in der Reihenfolge entsprechend nachrücken, und lauscht weiterhin in mindestens einem Ausweichkanal. Falls der Teilnehmer in einem sich anschließenden Schritt e) auf dem aktuellen Standard-Übertragungskanal gemäß Schritt d) alle anderen Teilnehmer empfangen kann, beendet er das Lauschen in mindestens einem Ausweichkanal.

Durch diese Vorgehensweise wird das Grundprinzip des Wechselns von einem aktuellen Standard-Übertragungskanal auf einen ersten Ausweichkanal gemäß der vorliegenden Erfindung realisiert. Durch das fortwährende Lauschen im Fehlerfall wird ein schnelles Zusammenführen der Gruppe auf einem gemeinsamen Übertragungskanal ermöglicht. Sobald alle Teilnehmer wieder auf einem Standard-Übertragungskanal empfangen werden können, wird das Lauschen in dem Ausweichkanal beendet. Diese Vorgehensweise führt zu einem stabilen Wechsel des Übertragungskanals und kann insbesondere innerhalb sehr kurzer Zeiträume durchgeführt werden, so dass schnell wieder der Kontakt innerhalb aller Teilnehmer der Gruppe sichergestellt werden kann.

Gemäß einer bevorzugten Ausgestaltung führt der Teilnehmer nach Schritt d) und vor Schritt e) folgenden Schritt f) aus, bei dem der Teilnehmer eine vorgebbare zweite Zeitdauer wartet und dabei prüft, ob er auf dem aktuellen Standard-Übertragungskanal alle anderen Teilnehmer empfangen kann. Ist dies der Fall, wechselt er in den bereits oben beschriebenen Schritt e). Falls dies jedoch nicht der Fall ist, er jedoch auf diesem aktuellen Standard-Übertragungskanal zumindest einen Teilnehmer empfangen kann, wechselt der Teilnehmer zurück zu Schritt c), das heißt er setzt das Lauschen in mindestens einem Ausweichkanal fort.

Besonders bevorzugt wechselt der Teilnehmer in Schritt d) weiterhin dann auf den ersten Ausweichkanal, wenn er weder auf dem aktuellen Standard-Übertragungskanal noch auf dem ersten Ausweichkanal während einer dritten vorgebbaren Zeitdauer einen Slot empfängt, den er als von der eigenen Gruppe gesendet erkennt. Wenn jedoch der Teilnehmer einen derartigen Wechsel so oft ausgeführt hat, dass mindestens jeder der Übertragungskanäle einmal der aktuelle Standard-Übertragungskanal war und/oder der Teilnehmer eine vorgebbare vierte Zeitdauer gewartet hat, wechselt er in einen Suchmodus, insbesondere zur Durchführung einer Neuformierung der Gruppe. In dem zuletzt genannten Fall ist der Teilnehmer quasi verloren gegangen.

Besonders bevorzugt lauscht der Teilnehmer in Schritt c) nach jedem ersten vorgebbaren zeitlichen Abstand in dem jeweils nächsten Ausweichkanal der Reihenfolge von Übertragungskanälen. Auf diese Weise wird sukzessive durch die Vielzahl von Übertragungskanälen gemäß der in Schritt a) festgelegten Reihenfolge gelauscht, so dass die Wahrscheinlichkeit, andere Teilnehmer zu finden und mit diesen auf einen gemeinsamen aktuellen Standard-Übertragungskanal zu wechseln, deutlich erhöht ist.

Weitere vorteilhafte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für die erfindungsgemäße Sende- und Empfangsvorrichtung.

Im Nachfolgenden wird ein Ausführungsbeispiel der vorliegenden Erfindung unter Bezugnahme auf die beigefügten Zeichnungen näher beschrieben. Es zeigen:
- Fig. 1: in schematischer Darstellung ein Ablaufdiagramm des erfindungsgemäßen Verfahrens; und
- Fig. 2: in schematischer Darstellung das sukzessive Wechseln auf den nächsten Ausweichkanal während des Lauschens.

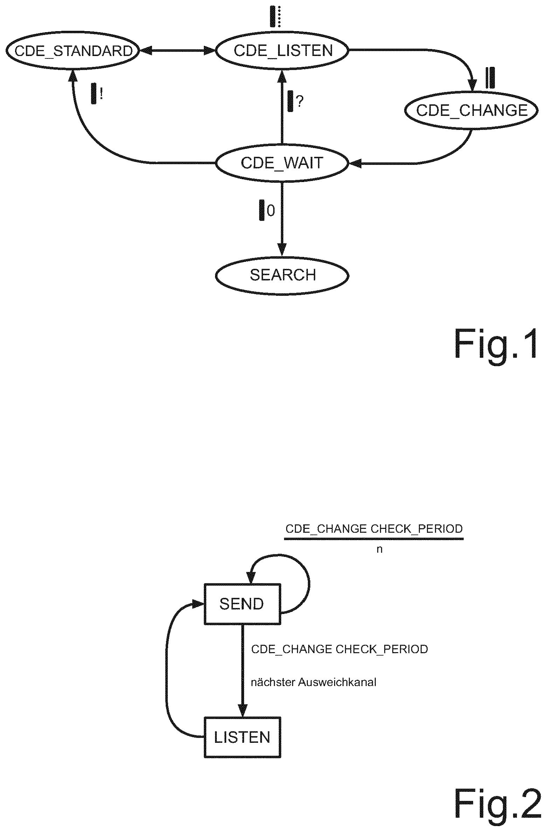

Fig. 1 zeigt in schematischer Darstellung ein Ablaufdiagramm für das erfindungsgemäße Verfahren, das die Durchführung eines Wechsels eines von einer Gruppe aus mehreren Teilnehmern gemeinsam genutzten Übertragungskanals beim Auftreten von Übertragungsstörungen betrifft. Zunächst wird in einem Schritt a) eine Reihenfolge von Übertragungskanälen in einer Initialisierungsphase der Formierung der Gruppe festgelegt, wodurch ein erster Übertragungskanal und Ausweichkanäle bestimmt werden. Im Zustand CDE_STANDARD senden und empfangen alle Teilnehmer auf dem ersten Übertragungskanal der festgelegten Reihenfolge von Übertragungskanälen als aktuellem Standard-Übertragungskanal. Ein Teilnehmer wechselt vom Zustand CDE_STANDARD in den Zustand CDE_LlSTEN, wenn er während einer Zeitdauer CDE_CHANGECHECK_TIME mindestens eine vorgebbare Anzahl von Teilnehmern auf dem aktuellen Standard-Übertragungskanal nicht empfangen kann. In diesem Zustand CDE_LISTEN beginnt der Teilnehmer zusätzlich sukzessive in den verschiedenen Ausweichkanälen zu lauschen. Mit Bezug auf Fig. 2 lauscht der Teilnehmer mit der Periode CDE_CHANGECHECK_PERIOD auf dem nächsten Ausweichkanal, wobei sukzessive aktuelle Ausweichkanal gewechselt wird. Allerdings sendet der Teilnehmer gemäß dem gewählten Protokoll fortwährend, das heißt beispielsweise mit der Periode CDE_CHANGECHECK_PERIOD/n (wobei n eine natürliche Zahl darstellt) Statusinformation auf dem aktuellen Standard-Übertragungskanal. Beispielsweise lauscht der Teilnehmer nach jeder fünften gesendeten Statusinformation im aktuellen nächsten Ausweichkanal. Der normale Sende- und Empfangsbetrieb findet im Zustand CDE_LISTEN nach wie vor auf dem aktuellen Standard-Übertragungskanal statt.

Der Teilnehmer wechselt vom Zustand CDE_LlSTEN in den Zustand CDE_CHANGE, wenn der Teilnehmer auf dem gerade gelauschten Ausweichkanal mindestens einen Slot empfängt, den er als von der eigenen Gruppe gesendet erkennt. Dabei macht der Teilnehmer den gerade gelauschten Ausweichkanal zum aktuellen Standard-Übertragungskanal, wobei die Ausweichkanäle in der Reihenfolge entsprechend nachrücken, und lauscht weiterhin in mindestens einem Ausweichkanal. Der Teilnehmer wechselt unmittelbar weiter in den Zustand CDE_WAIT und prüft hierbei, ob er auf dem aktuellen Standard-Übertragungskanal alle anderen Teilnehmer empfangen kann. Ist dies der Fall, beendet er das Lauschen in mindestens einem Ausweichkanal.

Der Teilnehmer wechselt überdies vom Zustand CDE_LISTEN in den Zustand CDE_CHANGE, wenn er weder auf dem aktuellen Standard-Übertragungskanal noch auf dem ersten Ausweichkanal während einer Zeitdauer CDE_CHANGETIME einen Slot empfängt, den er als von der eigenen Gruppe gesendet erkennt.

Wenn der Teilnehmer im Zustand CDE_WAIT mindestens während der Zeitdauer CDE_CHANGETIME zwar mehrere Teilnehmer, aber nicht alle, empfangen kann, wechselt der Teilnehmer zurück in den Zustand CDE8LISTEN. Wenn der Teilnehmer im Zustand CDE_WAIT alle Teilnehmer auf dem aktuellen Standard-Übertragungskanal empfangen kann, wechselt er in den Zustand CDE_STANDARD. Der Kanalwechsel, der im Zustand CDE_CHANGE den in der Reihenfolge nächsten Ausweichkanal zum aktuellen Standard-Übertragungskanal gemacht hat, bleibt der aktuelle Standard-Übertragungskanal.

Der Teilnehmer wechselt vom Zustand CDE_LISTEN unmittelbar zurück in den Zustand CDE_STANDARD, wenn er auf dem aktuellen Standard-Übertragungskanal wieder alle Teilnehmer empfangen konnte. Falls der Teilnehmer die Zustände CDE_WAIT, CDE_LISTEN, CDE_CHANGE ohne positives Ergebnis so oft durchlaufen hat, dass mindestens jeder der Übertragungskanäle einmal der aktuelle Standard-Übertragungskanal war oder bei Überschreiten einer vorgebbaren Zeitdauer CDE_CHANGECHECK_TIMEOUT, wird der Teilnehmer zum verlorenen Teilnehmer. Er wechselt in einen Suchmodus SEARCH, der insbesondere zur Durchführung einer Neuformierung der Gruppe dient.

In der Initialisierungsphase werden die Ausweichkanäle zufällig gewählt. Diese werden bevorzugt nur vom Master generiert, der diese an die Slaves überträgt. Dadurch erhalten alle Teilnehmer die gleichen Ausweichkanäle, insbesondere auch die gleiche Reihenfolge. Diese Informationen können durch den Master in einem Ergebnis-Slot am Ende der Initialisierungsphase übertragen werden.

Die Reihenfolge der Übertragungskanäle wird bevorzugt durch den Master unter Verwendung eines Zufallsgenerators festgelegt. Dabei wird der Zufallsgenerator durch die Zeitdauer initialisiert, während der der Master in der Initialisierungsphase die entsprechende Taste zur Formierung der Gruppe gedrückt gehalten hat. Damit wird eine identische Reihenfolge bei einer anderen Gruppe weitgehend ausgeschlossen. Im Falle einer Kollision mit einer anderen Gruppe führt daher bereits das Wechseln auf den ersten Ausweichkanal zur Wiederherstellung einer störungsfreien Übertragung.

Den Slot, den die Teilnehmer gemäß dem erfindungsgemäßen Verfahren auswerten, um zu prüfen, ob er von der eigenen Gruppe gesendet wurde, kann beispielsweise der so genannte CAP (Channel Access Protocol)-Slot darstellen. Dabei handelt es sich um einen Zeitabschnitt, in dem Verwaltungsinformation zur Benutzung des jeweiligen Übertragungskanals übertragen wird.

## Patentansprüche

1. Verfahren zur Durchführung eines Wechsels eines, von einer Gruppe aus mehreren Teilnehmern gemeinsam genutzten Übertragungskanals, folgende Schritte umfassend:
a) Festlegen einer Reihenfolge von Übertragungskanälen in einer Initialisierungsphase der Formierung der Gruppe, wodurch ein erster Übertragungskanal und Ausweichkanäle bestimmt werden;
b) alle Teilnehmer senden und empfangen auf dem ersten Übertragungskanal der festgelegten Reihenfolge von Übertragungskanälen als aktuellem Standard-Übertragungskanal;
c) wenn ein Teilnehmer während einer ersten vorgebbaren Zeitdauer mindestens eine vorgebbare Anzahl von Teilnehmern auf dem aktuellen Standard-Übertragungskanal nicht empfangen kann, beginnt er zusätzlich in ersten vorgebbaren zeitlichen Abständen in mindestens einem Ausweichkanal zu lauschen;
d) zumindest dann, wenn der Teilnehmer auf dem gerade gelauschten Ausweichkanal mindestens einen Slot empfängt, den er als von der eigenen Gruppe gesendet erkennt, macht der Teilnehmer den gerade gelauschten Ausweichkanal zum aktuellen Standard-Übertragungskanal, wobei die Ausweichkanäle in der Reihenfolge entsprechend nachrücken,
**dadurch gekennzeichnet,**
**dass** der Teilnehmer in Schritt d) weiterhin in mindestens einem Ausweichkanal lauscht,
wobei das Verfahren weiterhin folgenden Schritt umfasst:
e) falls der Teilnehmer auf dem aktuellen Standard-Übertragungskanal gemäß Schritt d) alle anderen Teilnehmer empfangen kann, beendet er das Lauschen in mindestens einem Ausweichkanal.

2. Verfahren nach Anspruch 1,
**dadurch gekennzeichnet,**
**dass** der Teilnehmer nach Schritt d) und vor Schritt e) folgenden Schritt f) ausführt:
f) der Teilnehmer wartet eine vorgebbare zweite Zeitdauer und prüft dabei, ob er auf dem aktuellen Standard-Übertragungskanal alle anderen Teilnehmer empfangen kann;
f1) falls dies der Fall ist, wechselt der Teilnehmer zu Schritt e);
f2) falls dies nicht der Fall ist und er auf diesem aktuellen StandardÜbertragungskanal zumindest einen Teilnehmer empfangen kann, wechselt der Teilnehmer zurück zu Schritt c).

3. Verfahren nach einem der Ansprüche 1 oder 2,
**dadurch gekennzeichnet,**
**dass** in Schritt d) der Teilnehmer weiterhin dann auf den ersten Ausweichkanal wechselt, wenn er weder auf dem aktuellen Standard-Übertragungskanal noch auf dem ersten Ausweichkanal während einer dritten vorgebbaren Zeitdauer einen Slot empfängt, den er als von der eigenen Gruppe gesendet erkennt.

4. Verfahren nach Anspruch 3,
**dadurch gekennzeichnet,**
**dass** der Teilnehmer, wenn er den Wechsel gemäß Anspruch 3 so oft ausgeführt hat, dass mindestens jeder der Übertragungskanäle einmal der aktuelle Standard-Übertragungskanal war, und/oder der Teilnehmer eine vorgebbare vierte Zeitdauer gewartet hat, in einen Suchmodus wechselt, insbesondere zur Durchführung einer Neuformierung der Gruppe.

5. Verfahren nach einem der vorhergehenden Ansprüche,
**dadurch gekennzeichnet,**
**dass** der Teilnehmer in Schritt c) nach jedem ersten vorgebbaren zeitlichen Abstand in dem jeweils nächsten Ausweichkanal der Reihenfolge von Übertragungskanälen lauscht.

6. Sende- und Empfangsvorrichtung, die einem Teilnehmer einer Gruppe zugeordnet ist, wobei die Sende- und Empfangsvorrichtung ausgebildet ist zur Durchführung des Verfahrens nach einem der vorhergehenden Ansprüche.

## Claims

1. A method for performing a change of a transmission channel, shared by a group of several participants, comprising the steps of:
a) determining a sequence of transmission channels in an initialization phase of the formation of the group, whereby a first transmission channel and alternate channels are determined;
b) all participants send and receive on the first transmission channel of the fixed sequence of transmission channels as the current standard transmission channel;
c) if a participant during a first predetermined time period cannot receive at least a predetermined number of participants on the current standard transmission channel, he begins to listen additionally at first predeterminable time intervals in at least one alternate channel;
d) at least when the participant on the alternate channel just listened to receives at least one slot, which he recognizes as being sent by the own group, the participant makes the alternate channel just listened to the current standard transmission channel, wherein the alternate channels move up accordingly in the sequence,
**characterized in that** the participant in step d) further listens in at least one alternate channel,
wherein the method further comprises the following step:
e) if the participant on the current standard transmission channel according to step d) can receive all other participants, he stops listening in at least one alternate channel.

2. The method according to claim 1,
**characterized in that**
the participant after step d) and before step e) performs the following step f):
f) the participant waits for a predeterminable second time period and checks whether on the current standard transmission channel he can receive all other participants;
f1) if this is the case, the participant switches to step e);
f2) if this is not the case and he can at least receive one participant on this current standard transmission channel, the participant changes back to step c).

3. Method according to one of claims 1 or 2,
**characterized in that**
in step d) the participant then further changes to the first alternate channel if neither on the current standard transmission channel nor on the first alternate channel during a third predetermined period of time he receives a slot, which he recognizes as being sent by the own group.

4. A method according to claim 3,
**characterized in that**
the participant when he has performed the change of claim 3 often enough for at least each of the transmission channels to have been the current standard transmission channel once, and/or the participant has waited for a predetermined fourth period of time, changes to a search mode, in particular for performing a reformation of the group.

5. Method according to any one of the preceding claims,
**characterized in that**
the participant in step c) after every first predeterminable time interval listens in the respective next alternate channel of the sequence of transmission channels.

6. Transmitting and receiving device assigned to a participant of a group, wherein the transmitting and receiving device is configured for performing the method according to any one of the preceding claims.

## Revendications

1. Procédé d'exécution d'un changement de canal de transmission, utilisé en commun par un groupe se composant de plusieurs participants, comprenant les étapes suivantes consistant à :
a) définir une succession de canaux de transmission dans une phase d'initialisation de la composition du groupe, un premier canal de transmission et des canaux de déviation devant être déterminés ;
b) envoyer et recevoir tous les participants sur le premier canal de transmission de la succession définie de canaux de transmission comme canal de transmission par défaut actuel ;
c) lorsqu'un participant ne peut pas recevoir, pendant une première durée pouvant être prédéterminée, au moins un nombre pouvant être prédéterminé de participants sur le canal de transmission par défaut actuel, il commence à écouter en plus, dans au moins un canal de déviation, à des premiers intervalles de temps pouvant être prédéterminés ;
d) au moins lorsque le participant reçoit, sur le canal de déviation précisément écouté, au moins un créneau, qu'il reconnaît comme étant envoyé par le propre groupe, le participant fait du canal de déviation précisément écouté le canal de transmission par défaut actuel, les canaux de déviation avançant en conséquence dans l'ordre,
**caractérisé en ce**
**que** le participant à l'étape d) continue à écouter dans au moins un canal de déviation,
le procédé comprenant en outre l'étape suivante consistant à :
e) lorsque le participant peut recevoir tous les autres participants sur le canal de transmission par défaut actuel, conformément à l'étape d), il met fin à l'écoute dans au moins un canal de déviation.

2. Procédé selon la revendication 1,
**caractérisé en ce**
**que** le participant exécute, après l'étape d) et avant l'étape e), l'étape suivante f) :
f) le participant attend une deuxième durée pouvant être prédéterminée et vérifie à ce sujet s'il peut recevoir tous les autres participants sur le canal de transmission par défaut actuel ;
f1) si tel est le cas, le participant passe à l'étape e) ;
f2) si tel n'est pas le cas et s'il peut recevoir au moins un participant sur ce canal de transmission par défaut actuel, le participant revient à l'étape c).

3. Procédé selon l'une des revendications 1 ou 2,
**caractérisé en ce**
**qu'**au cours de l'étape d), le participant continue alors à passer sur premier canal de déviation, lorsqu'il reçoit, ni sur le canal de transmission par défaut actuel, ni sur le premier canal de déviation pendant une troisième durée pouvant être prédéterminée, un créneau qu'il reconnaît comme étant envoyé par le propre groupe.

4. Procédé selon la revendication 3,
**caractérisé en ce**
**que** le participant, lorsqu'il a exécuté le basculement, conformément à la revendication 3, avec une fréquence telle qu'au moins chacun des canaux de transmission a été une fois le canal de transmission par défaut actuel et / ou que le participant a attendu une quatrième durée pouvant être prédéterminée, est passé en mode de recherche, en particulier à l'exécution d'une recomposition du groupe.

5. Procédé selon l'une des revendications précédentes, **caractérisé en ce**
**que** le participant à l'étape c) écoute, après chaque premier intervalle de temps pouvant être prédéterminé, dans le canal de dérivation respectivement suivant de la succession de canaux de transmission.

6. Dispositif d'émission et de réception, qui est affecté à un participant d'un groupe, le dispositif d'émission et de réception étant constitué pour exécuter le procédé selon l'une des revendications précédentes.
